# EUROPEAN PATENT APPLICATION

(11) **EP 1 645 498 A1**
(43) Date of publication of application: **12.04.2006**
(21) Application number: 04024193.7
(22) Date of filing: 11.10.2004
(51) Int. Cl.: B62L 3/06, B62H 5/18

(54) **Anti-theft brake handle assembly for a bicycle**

(71) Applicant: Lee Chi Enterprises Company Ltd., Chang Hwa City (TW)
(72) Inventor: Liu, Wen-Tsung, Chang Hwa City (TW); Dung, Shu-Fen, Chang Hwa City (TW); Li, Jung-Hua, Chang Hwa City (TW)
(74) Representative: Wehnert, Werner

(57) **Abstract**

The present invention relates to an anti-theft brake handle assembly for a bicycle which can be easily operated and can provide a good anti-theft effect. The brake handle assembly comprises a brake lever bracket (10), a brake lever (20) and an anti-theft lock, the anti-theft lock is controlled to fix the brake lever in a braking position. In this case, the user must unlock the anti-theft lock (30) before using the bicycle, and the anti-theft lock (30) can be locked or unlocked directly without requiring the user to get off the bicycle or to install additional components on the bicycle. The anti-theft brake handle assembly is well concealed in the brake lever bracket (10). Thereby, it doesn't affect the appearance of the bicycle.

## Description

### BACKGROUND OF THE INVENTION

### Field of the Invention

The present invention relates to an anti-theft brake handle assembly for a bicycle, the anti-theft brake handle assembly comprises a brake lever bracket, a brake lever and anti-theft lock, which is used to fix the brake lever in a braking position. The user must unlock the anti-theft lock before using the bicycle, otherwise, the wheel cannot be rotated.

### Description of the Prior Arts

There are many different anti-theft devices for bicycles sold on the market, however, every anti-theft device comprises many heavy and large components which require to be installed on the bicycle. This conventional anti-theft device is not only inconvenient to be assembled but also will affect the appearance of the bicycle. Thereby, how to make an anti-theft device for bicycles for meeting customer's requirement has become one of the most important objectives of the industrial trade.

One of the most commonly-used anti-theft devices for bicycles is the large lock which is directly locked on the wheel, however, this large lock still has some problems as follows:

First, since it is locked on the wheel directly, the large lock must be stored in a predetermined position when the user is riding the bicycle. Actually, most of the users would like to hang the lock on the frame of the bicycle, in this case, the lock is not only likely to hurt the bicycle but also will affect the appearance of the bicycle.

Second, the user has to get off the bicycle if want to lock and unlock the lock. For example, after removing the lock off the bicycle, the user then has to crouch down to lock the lock on the wheel, and vice versa, the user also has to crouch down to unlock the lock off the wheel, and then lock it again on the frame of the bicycle. Thereby, it is inconvenient to use this conventional lock.

Third, since it is inconvenient for the user to use this lock, most of the users prefer not to lock the bicycle if the bicycle only needs to be parked for a short while. However, it makes the bicycle is at the high risks of being stolen.

The present invention has arisen to mitigate and/or obviate the afore-described disadvantages.

### SUMMARY OF THE INVENTION

The primary objective of the present invention is to provide an anti-theft brake handle assembly for a bicycle which can be easily operated and can provide a good anti-theft effect. The brake handle assembly comprises a brake lever bracket, a brake lever and an anti-theft lock, the anti-theft lock is controlled to fix the brake lever in a braking position. In this case, the user must unlock the anti-theft lock before using the bicycle, and the anti-theft lock can be locked or unlocked directly without requiring the user to get off the bicycle or to install additional components on the bicycle.

The secondary objective of the present invention is to provide an anti-theft brake handle assembly which is well concealed in the brake body. Thereby, it doesn't affect the appearance of the bicycle.

The present invention will become more obvious from the following description when taken in connection with the accompanying drawings, which show, for purpose of illustrations only, the preferred embodiments in accordance with the present invention.

### BRIEF DESCRIPTION OF THE DRAWINGS

Fig. 1 is an exploded view of an anti-theft brake handle assembly for a bicycle in accordance with a first preferred embodiment of the present invention;
Fig. 2 is an assembly view of the anti-theft brake handle assembly for a bicycle in accordance with the first preferred embodiment of the present invention;
Fig. 3 is a partial enlarged view of the anti-theft brake handle assembly for a bicycle in Fig. 2;
Fig. 4 is an operational view of the anti-theft brake handle assembly for a bicycle in accordance with the first preferred embodiment of the present invention;
Fig. 5 is an exploded view of an anti-theft brake handle assembly for a bicycle in accordance with a second preferred embodiment of the present invention.

### DETAILED DESCRIPTION OF THE PREFERRED EMBODIMENTS

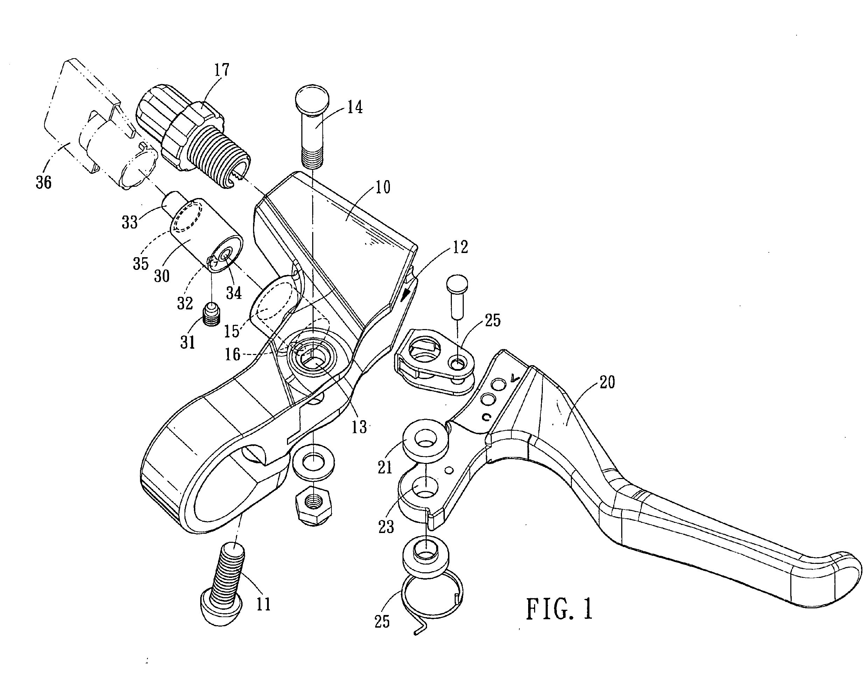

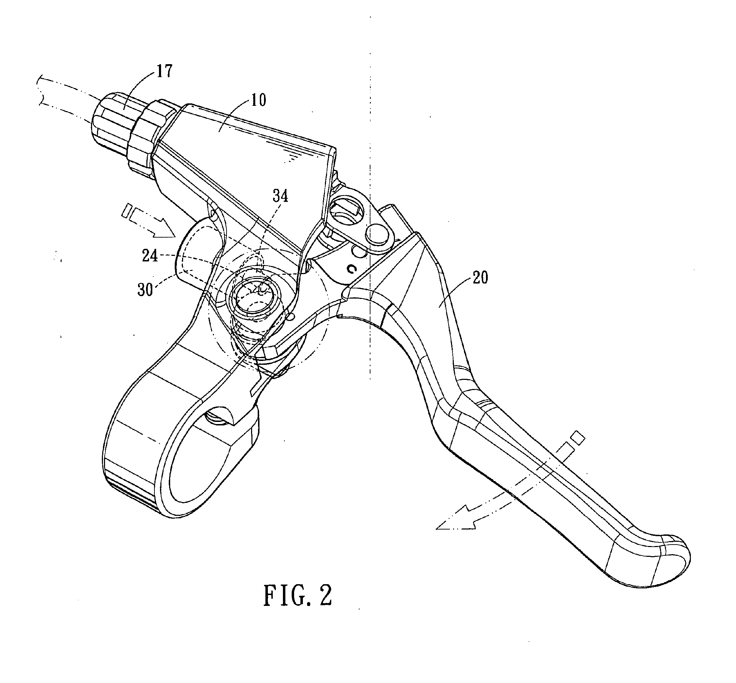

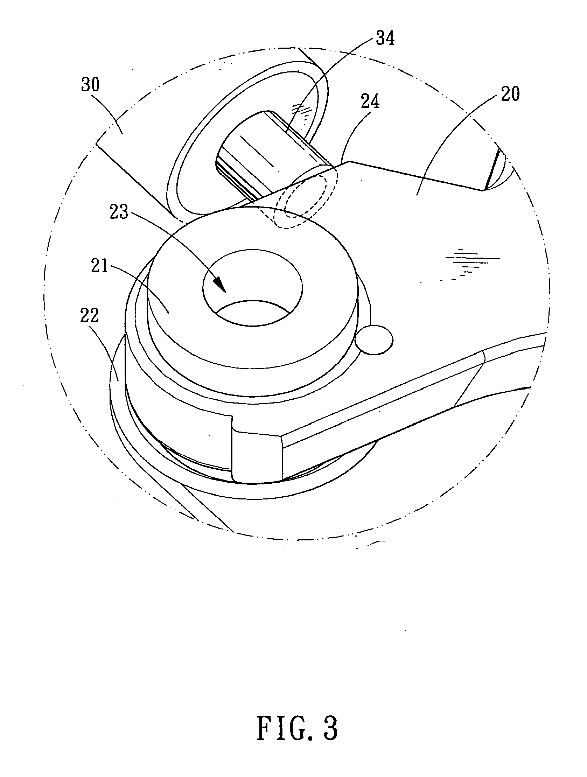

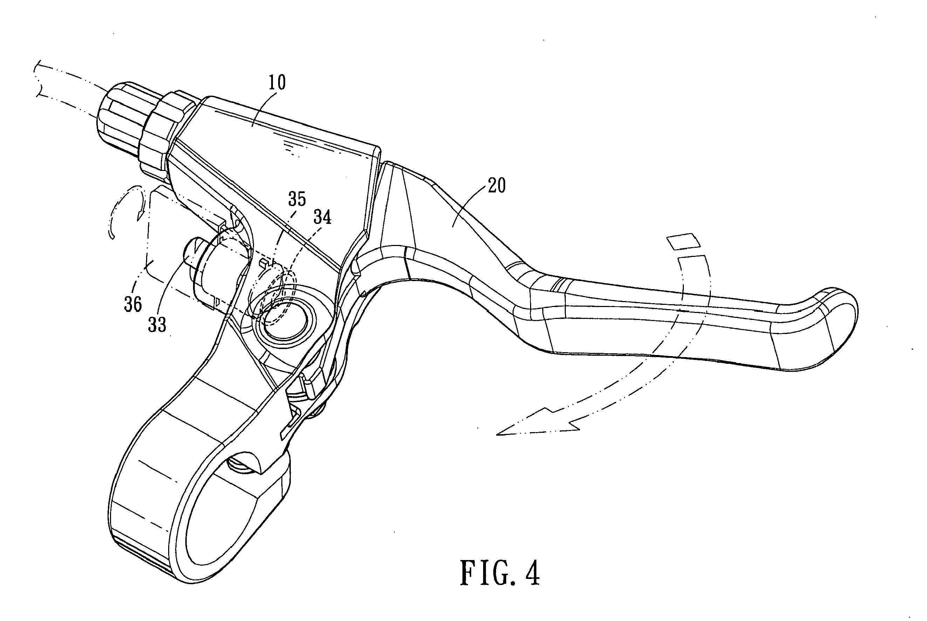

Referring to Figs. 1-4, an anti-theft brake handle assembly for a bicycle in accordance with a preferred embodiment of the present invention comprises: a brake lever bracket 10, a brake lever 20 and an anti-theft lock 30.

The brake lever bracket 10 is fixed to the handle bar of the bicycle through a screw 11. A space 12 is defined in the brake lever bracket 10, in the space 12 are provided a pivoting hole 13 and a pivot 14. At a side of the brake lever bracket 10 a through lock hole 15 is laterally formed corresponding to the space 12, and a threaded hole 16 is laterally formed beside the lock hole 15. In the space 12 of the brake lever bracket 10 is further provided a brake cable guider 17.

The brake lever 20 is pivotally disposed in the space 12 of the brake lever bracket 10 through a washer 21 and a return spring 22. A through hole 23 is formed on the brake lever 20 for insertion of the pivot 14 which is inserted in pivoting hole 13 of the brake lever bracket 10. The brake lever 20 is formed with an abutting portion 24 which faces toward the lock hole 15 of the brake lever bracket 10. A positioning member 25 is pivotally disposed on the brake lever 20 for positioning the brake cable and located in the direction of the brake cable guider 17.

The anti-theft lock 30 is provided with a key 36 and is installed in the lock hole 15 of the brake lever bracket 10. The anti-theft lock 30 is formed with a cavity 32 corresponding to the threaded hole 16 of the brake lever bracket 10, so that the anti-theft lock 30 is fixed in the brake lever bracket 10 by screwing a screw bolt 31 through the threaded hole 16 into the cavity 32. At both ends of the anti-theft lock 30 are provided a press button 33 and a bolt 34. The press button 33 partially protrudes out of the lock hole 15, at an end of the press button 33 is formed a locking hole 35. The bolt 34 abuts against the abutting portion 24 of the brake lever 20. The key 36 is used to insert in the locking hole 35 of the anti-theft lock 30 to control the position of the bolt 34 relative to the press button 33 (namely to lock or unlock the anti-theft lock 30).

Referring to particularly to Fig. 1, the anti-theft lock 30 can hardly be seen since it is well-concealed in the lock hole 15 of the brake lever bracket 10. Thereby, it doesn't affect the appearance of the bicycle. When a thief want to stole the bicycle, the anti-theft lock 30 will brake the bicycle to stop the wheel from rotating, so as to prevent the bicycle from being stolen.

It is more important that, at any time, the user can push the press button 33 so as to make the bolt 34 press against the abutting portion 24 of the brake lever 20, and position the brake lever 20 at a desired braking position. Thereby, when a thief want to stole the bicycle, the brake lever 20 will stop the wheel from rotating, so that the bicycle can be prevented from theft.

It is to be noted that the anti-theft device of the present invention is installed in the brake lever bracket 10 (easy to use), and the key is used to insert in the locking hole 35 of the anti-theft lock 30 to control the position of the bolt 34 relative to the press button 33 (namely to lock or unlock the anti-theft lock 30). And the bolt 34 is used to fix the brake lever 20 in a braking position (the brake lever 20 is concurrently affected by the return spring 22). Hence, the anti-theft lock 30 can be locked or unlocked directly without requiring the user to get off the bicycle or to install additional components on the bicycle.

The above-mentioned functions are achieved by the special structural designs as follows:
First, the anti-theft lock 30 is installed in lock hole 15 of the brake lever bracket 10.
Second, the bolt 34 of the anti-theft lock 30 is used to fix the brake lever 20 in a braking position.

Thereby, it is to be understood that such equivalent constructions do not depart from the spirit and scope of the invention in its broadest form. For example, using the bolt of the lock to fix, to abut against or to insert in the brake lever.

The anti-theft lock 30 also can be used to cooperate with all kinds of locks sold on the market. For example, the keyless coded lock, magnetic lock, electronic lock, and etc. Any modifications having the two mentioned structural characteristics would fall in the scope and the spirit of the present invention.

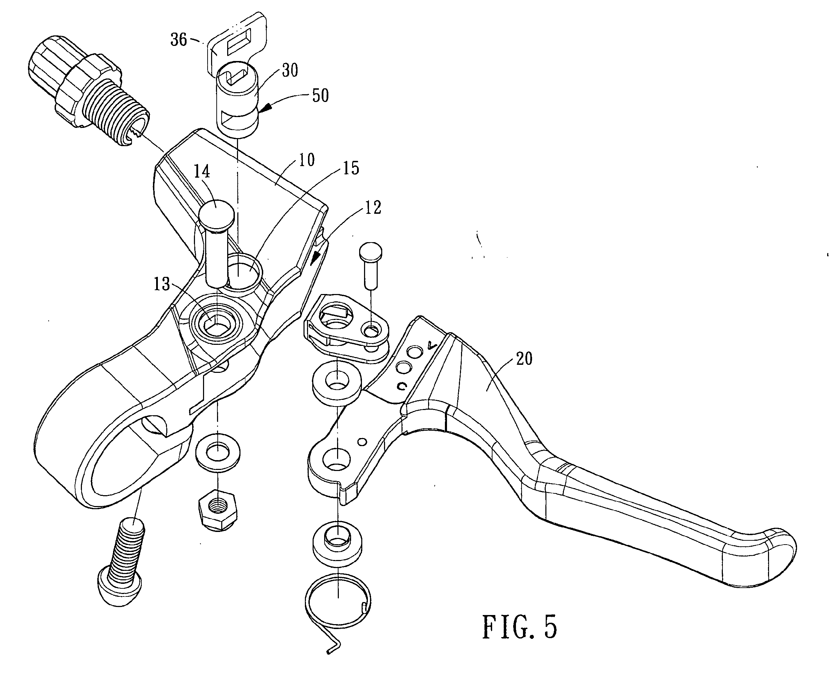

For example, another embodiment of the present invention is shown in Fig. 5, the brake lever bracket 10 is also defined with a space 12, and the brake lever 20 is assembled to the brake lever bracket 10 by taking advantage of the pivoting hole 13 and the pivot 14. However, the lock hole 15 in this embodiment is changed to be parallel to the pivoting hole 13, and the anti-theft lock 30 is annularly formed with a cam-like structure 50 which can be rotated by the key 36 to abut against the abutting portion 24 of the brake lever 20, so that the brake lever 20 can be fixed in a braking position.

While we have shown and described various embodiments in accordance with the present invention, it should be clear to those skilled in the art that further embodiments may be made without departing from the scope of the present invention.

## Claims

1. An anti-theft brake handle assembly for a bicycle comprising:
a brake lever bracket, a brake lever and an anti-theft lock, wherein the anti-theft lock is installed in the brake lever bracket for correspondingly fixing the brake lever in a braking position.

2. The anti-theft brake handle assembly for a bicycle as claimed in claim 1, wherein the brake lever bracket is fixed on a handle bar of a bicycle, the brake lever bracket is formed with a space, in the space are provided a pivoting hole and a pivot, the brake lever is pivotally disposed in the brake lever bracket;
the brake lever bracket is formed with a lock hole corresponding to the space;
the anti-theft lock is installed in the lock hole of the brake lever bracket, a bolt of the anti-theft lock serves to position the brake lever.

3. The anti-theft brake handle assembly for a bicycle as claimed in claim 2, wherein a threaded hole is laterally formed beside the lock hole of the brake lever bracket, the anti-theft lock is formed with a cavity corresponding to the threaded hole, and a screw bolt is screwed through the threaded hole into the cavity so as to fix the anti-theft lock in the brake lever bracket.

4. The anti-theft brake handle assembly for a bicycle as claimed in claim 2, wherein an abutting portion is formed on the brake lever and located in the direction of the lock hole, at both ends of the anti-theft lock are provided a press button and a bolt, the press button partially protrudes out of the lock hole, and at an end of the press button is formed a locking hole, the bolt of the anti-theft lock serves to abut against the abutting portion of the brake lever, a key is used to insert in the locking hole of the anti-theft lock to control the anti-theft lock.

5. The anti-theft brake handle assembly for a bicycle as claimed in claim 3, wherein an abutting portion is formed on the brake lever and located in the direction of the lock hole, at both ends of the anti-theft lock are provided a press button and a bolt, the press button partially protrudes out of the lock hole, and at an end of the press button is formed a locking hole, the bolt of the anti-theft lock serves to abut against the abutting portion of the brake lever, a key is used to insert in the locking hole of the anti-theft lock to control the anti-theft lock.

6. The anti-theft brake handle assembly for a bicycle as claimed in claim 1, wherein the brake lever bracket is fixed on the handle bar of a bicycle, the lock hole is formed on the brake lever bracket and faces toward the brake lever, the anti-theft lock is installed in the lock hole of the brake lever bracket, and the anti-theft lock is formed with a cam-like structure corresponding to the brake lever.

7. The anti-theft brake handle assembly for a bicycle as claimed in claim 2, wherein the anti-theft lock is provided with a key which is used to control the motion of the bolt of the anti-theft lock.

8. The anti-theft brake handle assembly for a bicycle as claimed in claim 2, wherein the anti-theft lock is a keyless coded lock.

9. The anti-theft brake handle assembly for a bicycle as claimed in claim 6, wherein the anti-theft lock is a magnetic lock.

10. The anti-theft brake handle assembly for a bicycle as claimed in claim 7, wherein the anti-theft lock is electronic lock.
